# EUROPÄISCHE PATENTSCHRIFT

(11) **EP 3 165 065 B1**
(45) Veröffentlichungstag und Bekanntmachung des Hinweises auf die Patenterteilung: **08.12.2021**
(21) Anmeldenummer: 16401078.7
(22) Anmeldetag: 02.11.2016
(51) Int. Cl.: A01C 17/00

(54) **VERFAHREN ZUM BESTIMMEN EINES STREUBILDS EINES SCHLEUDERSTREUERS**
METHOD FOR DETERMINING A DISTRIBUTION PATTERN OF A DISTRIBUTOR
PROCÉDÉ DE DÉTERMINATION D'UN DIAGRAMME DE DISPERSION D'UN ÉPANDEUR CENTRIFUGE

(30) Priorität: 06.11.2015 DE 102015119072
(43) Veröffentlichungstag der Anmeldung: 10.05.2017
(73) Patentinhaber: Amazonen-Werke H. Dreyer SE & Co. KG, 49205 Hasbergen (DE)
(72) Erfinder: Dreyer, Justus, 49076 Osnabrück (DE); Resch, Rainer, 49170 Hagen a TW (DE); Kielhorn, Arnd, 49090 Osnabrück (DE)

(56) Entgegenhaltungen:
- EP-A1- 2 923 546
- DE-A1- 19 500 824
- DE-A1-102011 120 858

## Beschreibung

Die Erfindung betrifft ein Verfahren zum Bestimmen eines Streubilds eines Schleuderstreuers gemäß dem Oberbegriff des Anspruchs 1 und eine entsprechende Vorrichtung.

Beim Ausstreuen von Dünger ist die Verteilung der Düngerkörner in einer Richtung quer zur Fahrtrichtung eines Schleuderstreuers an die gewünschte Arbeitsbreite anzupassen. Das Fließverhalten und das Flugverhalten der Düngerkörner hängen hierbei unter anderem von der Korngröße, Kornform, Reindichte, Schüttdichte und Kornfestigkeit ab. Für unterschiedliche Schleuderstreuer lassen sich hierbei die empfohlenen Einstellwerte unter Berücksichtigung der jeweiligen Düngersorte aus Datenbanken abrufen. Obwohl sich die Arbeitsbreite des Schleuderstreuers damit prinzipiell auf geeignete Weise einstellen lässt, lassen sich Abweichungen von den erwarteten Verteilungen der Düngerkörner quer zur Fahrtrichtung des Schleuderstreuers nicht immer vermeiden. Grund hierfür sind in erster Linie Veränderungen der Düngerqualität, beispielsweise bei Änderungen der Luftfeuchte, oder unzureichende Daten für bestimmte Düngersorten. Die tatsächliche Verteilung der Düngerkörner quer zur Fahrtrichtung des Schleuderstreuers muss dann in der praktischen Anwendung überprüft werden.

Zu diesem Zweck ist aus der DE 10 2004 017 075 A1 beispielsweise eine Messschale bekannt, bei der eine Auffangfläche für Düngerkörner durch sogenannte Antispritzverlustgitter rasterförmig unterteilt ist. Die Messschale ist auf diese Weise in eine Vielzahl von Teilschalen unterteilt, in denen Düngerkörner aufgefangen und gesammelt werden. Die derart gesammelten Fraktionen werden dann ausgewogen. Dieses Vorgehen ist allerdings vergleichsweise umständlich und zeitaufwendig.

Als Alternative schlägt die DE 103 27 129 A1 ein Bild gebendes Verfahren vor, bei dem ein Fahrzeug mit einer darauf installierten Kamera quer zu den Fahrspuren eines Düngerstreuers über die ausgestreuten Düngerkörner gefahren wird. Hierbei werden mehrere Kamerabilder der bestreuten Ackerfläche aufgenommen und die Verteilung der abgebildeten Düngerkörner ermittelt. Dies erfordert jedoch ein separates Fahrzeug mit einem speziellen Kamerasystem.

Es besteht somit der Bedarf für ein demgegenüber vereinfachtes Verfahren zum Bestimmen eines Streubilds quer zur Fahrtrichtung eines Schleuderstreuers.

Die EP 2 923 546 A1 offenbart ein Verfahren und eine Vorrichtung zum Bestimmen einer Verteilung von Düngerkörnern. Demnach werden Düngerkörner auf ausgelegten Haftmatten am Ort ihres Auftreffens aufgefangen und festgehalten. Durch Aufnehmen derart ausgestreuter und festgehaltener Düngerkörner in wenigstens einem Kamerabild lässt sich eine Ist-Verteilung der ausgestreuten Düngerkörner bestimmen, um Einstellwerte von Düngerstreuern zu optimieren. Die beschriebene Vorrichtung umfasst hierzu ein digitales Bildaufnahmegerät, das beispielsweise ein Smartphone sein kann, und das sich prinzipiell zum Erzeugen von Bilddaten in Schrägansichten eignet. Bekannt ist zudem, dass derartige Smartphones Neigungssensoren enthalten können. Ferner ist eine Bildauswerteeinheit vorhanden, mit der sich Bilddaten analysieren lassen, sowie eine Berechnungseinheit, mit der sich Düngermengen bestimmten Teilbereichen zuordnen und berechnen lassen.

Die gestellte Aufgabe wird mit einem Verfahren nach Anspruch 1 gelöst. Demnach eignet sich dieses zum Bestimmen eines Streubilds eines Schleuderstreuers auf einer landwirtschaftlichen Anbaufläche. Hierzu wird ein von dem Schleuderstreuer erzeugter Streufächer in Fahrtrichtung über die Anbaufläche bewegt. Ferner werden mehrere bezüglich ihrer Position quer zur Fahrtrichtung unterschiedliche Teilbereiche der bestreuten Anbaufläche digital abgebildet. Erfindungsgemäß bildet man die Teilbereiche in Schrägansichten ab, bestimmt die Neigung der Schrägansichten zur flächenspezifischen Berechnung von Düngermengen, und analysiert mittels einer Bildauswerteeinheit in den Schrägansichten erzeugte Bilddaten in unterschiedlichen Farbbereichen, um zwischen Boden, Bewuchs und Dünger zu unterscheiden. Ferner wird daraus mittels einer Berechnungseinheit eine Düngermenge pro Teilbereich berechnet. Die Düngermenge ist beispielsweise ein spezifischer Wert pro Bodenflächeneinheit.

Somit können die bestreuten Teilbereiche von einer auf der Anbaufläche stehenden Person mit einem Fotoapparat, einer Videokamera, einem Smartphone oder dergleichen abgebildet werden. Folglich kann das Verfahren flexibel vor Ort eingesetzt werden. Die Analyse der Bilddaten und die Berechnung der Düngermengen erfolgen auf der Grundlage digitaler Bildbearbeitung im Bildaufnahmegerät und/oder in einem separaten Computer.

Vorzugsweise wird aus den berechneten Düngermengen in den Teilbereichen eine Verteilung des Düngers quer zur Fahrtrichtung ermittelt. Die derart ermittelte Verteilung ist repräsentativ für das Streubild des Schleuderstreuers mit der gestreuten Düngersorte beim normalen Befahren von Fahrgassen auf der Anbaufläche.

Vorzugsweise wird dem Bewuchs zur Auswertung der Bilddaten ein separater, insbesondere grüner Farbbereich zugeordnet. Damit lässt sich der Bewuchs für die Berechnung der Düngermenge zuverlässig vom Boden der Anbaufläche und vom gestreuten Dünger unterscheiden.

Vorzugsweise wird dem Dünger zur Auswertung der Bilddaten ein separater Farbbereich zugeordnet, der insbesondere durch separate Abbildung des Düngers ermittelt und/oder in Form einer für den Dünger spezifischen Herstellerangabe vorgegeben wird. Dadurch lässt sich der Dünger bei der Berechnung der Düngermenge zuverlässig vom Boden und vom Bewuchs unterscheiden.

Der Dünger wird beispielsweise vor Ort in einer separaten Schale oder dergleichen abgebildet, insbesondere unmittelbar vor der Aufnahme der Schrägansichten und/oder unmittelbar nach der Aufnahme der Schrägansichten. Damit können die Lichtverhältnisse bei der Aufnahme der Schrägansichten berücksichtigt werden. Ebenso können charakteristische Farbwerte als Herstellerangabe für die Bildauswertung übernommen werden.

Vorzugsweise wird dem Boden zur Auswertung der Bilddaten ein separater Farbbereich zugeordnet, der insbesondere durch separate Abbildung des Bodens ermittelt wird. Dadurch lässt sich der Boden bei der Bildauswertung zuverlässig vom Dünger und vom Bewuchs der Anbaufläche unterscheiden.

Insbesondere wird der Boden unmittelbar vor der Aufnahme der Schrägansichten und/oder unmittelbar nach der Aufnahme der Schrägansichten separat abgebildet. Dadurch lassen sich die bei der Aufnahme der Schrägansichten herrschenden Lichtverhältnisse berücksichtigen.

Erfindungsgemäß wird die Neigung mittels eines Neigungssensors bestimmt. Beispielsweise ist an einem für die Schrägansichten verwendeten Bildaufnahmegerät, insbesondere einem Smartphone, ein entsprechender Neigungssensor vorhanden, der bei der Aufnahme der Schrägansichten ausgelesen wird. Dadurch lässt sich die Neigung der einzelnen Schrägansichten zuverlässig ermitteln und bei einer flächenspezifischen Berechnung der Düngermenge berücksichtigen.

Ergänzend kann die Neigung mittels eines gemeinsam mit den Teilbereichen der bestreuten Anbaufläche abgebildeten geometrischen Referenzkörpers bestimmt werden.

Dieser ist beispielsweise eine rechteckige oder quadratische Platte oder ein rechteckiger oder quadratischer Rahmen, die/der in dem von den Schrägansichten jeweils abgedeckten Teilbereichen ausgelegt wird. Die Neigung lässt sich dann anhand der perspektivischen Verzerrung des hinsichtlich Form und Größe definierten Referenzkörpers für jede Schrägansicht separat durch Bildauswertung berechnen.

Vorzugsweise wird ferner zu den Schrägansichten je eine Referenzansicht eines geometrischen Referenzkörpers erstellt, der auf einer von dem Schleuderstreuer befahrenen Fahrspur positioniert ist. Der Referenzkörper ist beispielsweise eine quaderförmige Säule mit insbesondere unterschiedlich gefärbten Seitenflächen. Die Referenzansicht wird dann vom selben Standort aus aufgenommen wie die zugehörige Schrägansicht. Aus der Referenzansicht des geometrischen Referenzkörpers lässt sich sowohl die Entfernung zur Fahrspur als auch ein Abstand in Fahrtrichtung von dem geometrischen Referenzobjekt aus gesehen berechnen. Somit kann für jede Schrägansicht der Ort der Bildaufnahme bezüglich der Fahrspur und bezüglich einer quer dazu verlaufenden Referenzlinie berechnet werden.

Vorzugsweise wird ferner zu wenigstens einer Schrägansicht eine Ortsbestimmung der Bildaufnahme mittels GPS durchgeführt. Dies ermöglicht eine besonders exakte Bestimmung des Bildaufnahmeorts und ermöglicht insbesondere in Verbindung mit einer Neigungsberechnung der Schrägansicht eine exakte Zuordnung der abgebildeten Teilbereiche bezüglich der von dem Schleuderstreuer befahrenen Fahrspur. Somit lassen sich Düngermenge pro Bodenfläche und die aus den Düngermengen der einzelnen Schrägansichten resultierende Querverteilung des Düngers exakt ermitteln. Beispielsweise sind ein GPS-System und ein Neigungssensor gemeinsam in dem Bildaufnahmegerät vorhanden, das beispielsweise ein Smartphone ist.

Vorzugsweise misst man die Höhe des Bewuchses, berechnet eine relative Verdeckung des Düngers in den Schrägansichten durch den Bewuchs und berücksichtigt die relative Verdeckung bei der Berechnung der Düngermengen. Somit lassen sich Fehler durch den Dünger teilweise verdeckenden Bewuchs reduzieren oder weitgehend eliminieren.

Beispielsweise misst man die Höhe des Bewuchses auf der Anbaufläche stichprobenartig. Alternativ könnte man dazu in den Schrägansichten ein Größenmaßstab abbilden, um durch Größenvergleich in den Schrägansichten die Höhe des Bewuchses zu ermitteln. Der Größenmaßstab kann beispielsweise ein Quader oder dergleichen geometrischer Körper sein, dessen Höhe bekannt ist, und/oder auf dem eine Skala oder dergleichen angebracht ist. Durch teilweise Verdeckung des Größenmaßstabs lässt sich die Höhe des Bewuchses auf einfache Weise in den Schrägansichten abschätzen. Der Größenmaßstab kann auch zur Abschätzung einer perspektivischen Verzerrung ausgebildet sein, um daraus die Neigung der zugehörigen Schrägansicht zu berechnen.

Vorzugsweise werden die Teilbereiche der bestreuten Anbaufläche überlappend abgebildet. Dies ermöglicht eine besonders aussagekräftige Ermittlung der Querverteilung des Düngers und des zugehörigen Streubilds.

Vorzugsweise werden die Schrägansichten mit einem Smartphone aufgenommen. Dadurch lassen sich die benötigten Funktionen zur Bildaufnahme, Neigungsmessung, Ortsbestimmung mittels GPS auf einfache Weise in einem einzigen Gerät bereitstellen. Ferner lassen sich Auswertungsprogramme zur Bildauswertung, zur Berechnung der Düngermenge pro Bodenfläche und zur Ermittlung von Streubilden quer zur Fahrtrichtung mittels entsprechender Applikationen auf dem Smartphone installieren.

Insbesondere werden zugehörige Bilddaten dann in dem Smartphone verarbeitet und daraus die Düngermengen für die einzelnen Schrägansichten und/oder eine Verteilung des Düngers quer zur Fahrtrichtung berechnet. Somit lassen sich Streubilder des Düngers mobil und unabhängig von Bordcomputern berechnen. Berechnungsergebnisse lassen sich nichtsdestoweniger drahtlos an Bordcomputer übermitteln, die beispielsweise an dem Schleuderstreuer und/oder einem zugeordneten Schlepper ausgebildet sind.

Alternativ übermittelt das Smartphone die Bilddaten drahtlos an einen zur Steuerung der Schleuderstreuers ausgebildeten Bordcomputer. Ferner berechnet der Bordcomputer daraus Düngermengen für die einzelnen Schrägansichten, eine Verteilung des Düngers quer zur Fahrtrichtung und/oder Einstellwerte für den Schleuderstreuer. Einstellwerte des Schleuderstreuers sind beispielsweise Drehzahlen von Schleuderscheiben, Positionen von Einleitsystemen für den Dünger bezüglich der Streuscheiben, Dosiermenge des Düngers pro Schleuderscheibe oder dergleichen.

Vorzugsweise wird das Verfahren von einer auf der Anbaufläche stehenden Person durchgeführt. Separate Hilfsmittel zum Positionieren der Bildaufnahmeeinheit sind dann entbehrlich.

Alternativ werden die Schrägansichten beispielsweise mit einer digitalen Kamera aufgenommen. Zugehörige Bilddaten werden dann drahtlos an einen zur Steuerung des Schleuderstreuers ausgebildeten Bordcomputer übermittelt. Ferner berechnet der Bordcomputer daraus, Neigungen der Schrägansichten, Düngermengen für die einzelnen Schrägansichten, eine Verteilung des Düngers quer zur Fahrtrichtung und/oder Einstellwerte für den Schleuderstreuer. Es können dann auch unterschiedliche Bildaufnahmegeräte verwendet werden. Von der Kamera oder einem daran befestigten Neigungssensor können Neigungsdaten zu den Schrägansichten ergänzend oder alternativ an den Bordcomputer übermittelt werden.

Die gestellte Aufgabe wird ebenso mit Vorrichtung gemäß Anspruch 15 gelöst. Demnach ist diese zum Bestimmen eines Streubilds eines Schleuderstreuers auf einer landwirtschaftlichen Anbaufläche gemäß dem Verfahren nach wenigstens einer der vorigen Ausführungsformen ausgebildet und umfasst:
- ein digitales Bildaufnahmegerät, insbesondere ein Smartphone, zum Erzeugen von Bilddaten von in Schrägansichten aufgenommen Teilbereichen einer bestreuten Anbaufläche;
- einen Neigungssensor zum Bestimmen der Neigung der Schrägansichten;
- eine Bildauswerteeinheit zum Analysieren der Bilddaten in unterschiedlichen Farbbereichen, um zwischen Boden, Bewuchs und Dünger zu unterscheiden;
wobei die Bildauswerteeinheit dazu ausgebildet ist, dem Bewuchs einen ersten separaten Farbbereich und dem Dünger einen zweiten separaten Farbbereich zuzuordnen; und
- einer Berechnungseinheit zum von der Neigung abhängigen flächenspezifischen Berechnen von den Teilbereichen zugeordneten Düngermengen und zur Berechnung einer Verteilung des Düngers entlang der aufgenommenen Teilbereiche.

Eine bevorzugte Ausführungsform der Erfindung ist in den Zeichnungen dargestellt. Es zeigen:
Fig. 1 eine schematische perspektivischen Ansicht einer erfindungsgemäßen Bildaufnahme; und
Fig. 2 ein mit dem Verfahren ermitteltes Streubild in Form einer Querverteilung.

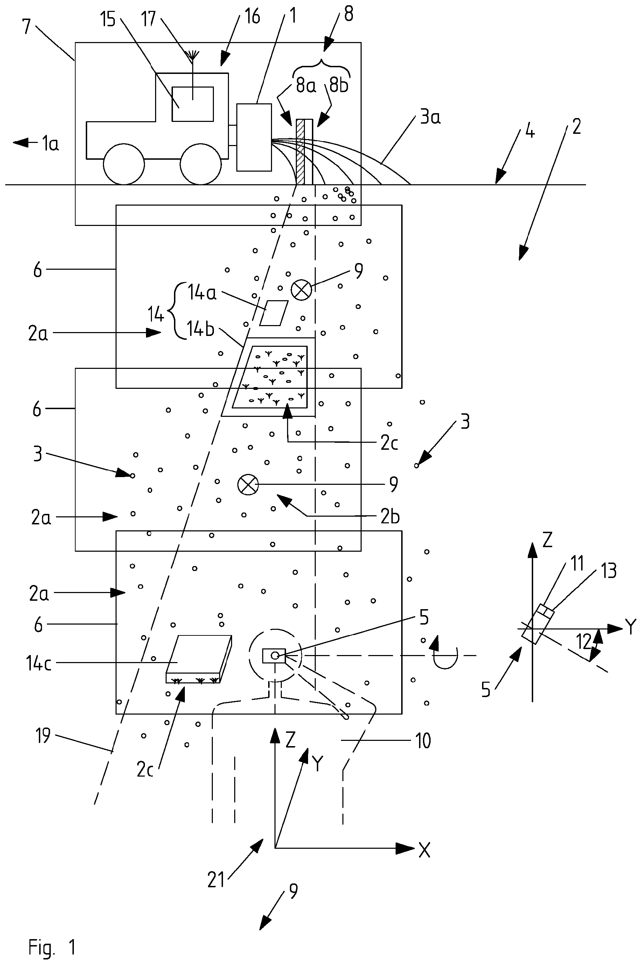

Wie Fig. 1 erkennen lässt, wird von einem Schleuderstreuer 1 auf einer landwirtschaftlichen Anbaufläche 2 Dünger 3 in Form einer Streufächers 3a beim Befahren einer Fahrgasse 4 quer zur Fahrtrichtung 1a ausgestreut.

Ferner werden mit einem Smartphone 5 oder mit einem anderen Bildaufnahmegerät, wie beispielsweise einem digitalen Fotokamera oder einer digitalen Videokamera, Schrägansichten 6 von Teilbereichen 2a der mit dem Dünger 3 bestreuten Anbaufläche 2 aufgenommen. Von den Schrägansichten 6 werden im Bildaufnahmegerät Bilddaten in einem gebräuchlichen Datenformat, wie beispielsweise JPEG oder dergleichen, auf bekannte Weise erzeugt.

Zusätzlich kann wenigstens eine Referenzansicht 7 des Schleuderstreuers 1 und/oder eines auf der Fahrspur 4 positionierten ersten geometrischen Referenzkörpers 8 auf entsprechende Weise aufgenommen werden. Die Schrägansichten 6 und die Referenzansicht 7 werden vorzugsweise von mehreren Aufnahmeorten 9 aus beispielsweise von einer dort stehenden Person 10 aufgenommen.

Das Smartphone 5 oder dergleichen Bildaufnahmegerät umfasst einen Neigungssensor 11 zum Messen einer Neigung (eines Neigungswinkels) 12 beim Aufnehmen der einzelnen Schrägansichten 6 und gegebenenfalls auch der Referenzansicht 7. Ferner umfasst das Smartphone 5 oder dergleichen Bildaufnahmegerät vorzugsweise ein GPS-System 13, um die Aufnahmeorte 9 der einzelnen Schrägansichten 6 zu bestimmen.

Ergänzend kann die Neigung 12 der Schrägansichten 6 durch Abbildung eines zweiten geometrischen Referenzkörpers 14 definierter Form und Größe ermittelt werden, der beispielsweise als Platte 14a oder Rahmen 14b ausgebildet sind. Der zweite geometrische Referenzkörper 14 hat vorzugsweise eine rechteckige Form. Aufgrund der perspektivischen Verzerrung des zweiten geometrischen Referenzkörpers 14 und anhand seiner Größe in den Schrägansichten 6 lässt sich sowohl die Neigung 12 als auch der Abstand des Aufnahmeorts 9 vom geometrischen Referenzkörper 14 und vom abgebildeten Teilbereich 2a mittels Bildauswertung der zugehörigen Schrägansicht 6 berechnen.

Eine Bildauswertung der Schrägansichten 6 wird beispielsweise in dem Smartphone 5 oder dergleichen Bildaufnahmegerät vorgenommen oder in einem Bordcomputer 15, der beispielsweise an einem dem Schleuderstreuer 1 zugeordneten Schlepper 16 oder an dem Schleuderstreuer 1 selbst ausgebildet ist. Ferner ist an dem Schlepper 16 und/oder an dem Schleuderstreuer 1 vorzugsweise ein GPS-System 17 zur Ortsbestimmung des Schleuderstreuers 1 ausgebildet.

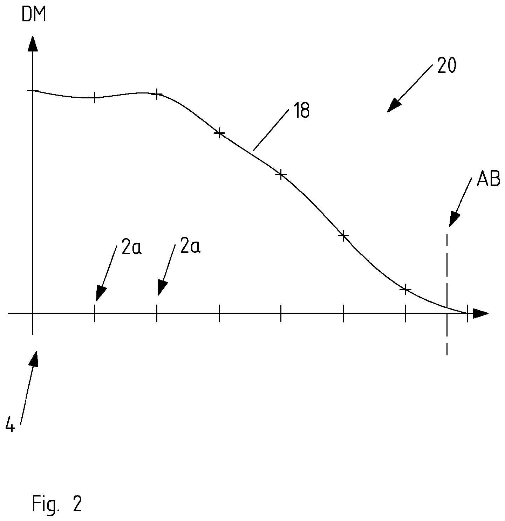

In dem Smartphone 5 oder dergleichen Bildaufnahmegerät oder in dem Bordcomputer 15 wird aus den Bilddaten der Schrägansichten 6 und der Neigung 12 für jeden Teilbereich 2a eine Düngermenge DM pro Flächeneinheit berechnet und daraus eine in der Fig. 2 schematisch angedeutete Querverteilung 18 des Düngers 3 beispielsweise entlang einer orthogonal zur Fahrspur 4 verlaufenden Richtung 19 ermittelt. Die Querverteilung 18 der Düngermenge DM entspricht dann einem für den Dünger 3 spezifischen Streubild 20 des Schleuderstreuers 1.

Zu diesem Zweck wird bei der Auswertung der Bilddaten zwischen dem Dünger 3, dem Boden 2b der Anbaufläche 2 und dem Bewuchs 2c der Anbaufläche 2 nach Farben unterschieden.

Der Bewuchs 2c ist in der Fig. 1 lediglich schematisch und der besseren Übersichtlichkeit halber an ausgewählten Stellen der Anbaufläche 2 dargestellt. Der Bewuchs 2c führt in den Schrägansichten 6 zur einer teilweisen perspektivischen Verdeckung des Düngers 3. Diese kann beispielsweise anhand der jeweiligen Neigung 12 berechnet und bei der Ermittlung der Düngermenge DM berücksichtigt werden.

Das Ausmaß der Verdeckung durch den Bewuchs 2c hängt von der Dichte des Bewuchses 2c und von dessen Höhe ab. Diese lässt sich beispielsweise separat in Stichproben messen oder in den Schrägansichten 6 durch Größenvergleich mit einem beispielsweise quaderförmigen Größenmaßstab 14c ermitteln. Der Größenmaßstab 14c kann zudem als zweiter geometrischer Referenzkörper 14 ausgebildet sein, indem die perspektivische Verzerrung seiner Oberseite in den Schrägansichten 6 ausgewertet wird.

Der auf der Fahrspur 4 positionierte erste geometrische Referenzkörper 8 ist beispielsweise eine quaderförmige Säule und hat vorzugsweise unterschiedlich gefärbte Seitenwände 8a, 8b. Dies erleichtert eine genaue Bestimmung der jeweiligen Aufnahmeposition 9 bezüglich des geometrischen Referenzkörpers 8. Ebenso kann die Entfernung zum geometrischen Referenzkörper 8 anhand seiner Größe in den einzelnen Referenzansichten 7 bestimmt werden.

Aufnahmeposition 9 und Neigungswinkel 12 sind beispielsweise bezüglich eines kartesischen Koordinatensystems 21 definiert, dessen x-Achse in Fahrtrichtung 1a beziehungswiese entgegen der Fahrtrichtung 1a verläuft, und dessen y-Achse die Richtung 19 festlegt, entlang der eine Querverteilung 18 des Düngers 3 und somit das diesbezügliche Streubild 20 des Schleuderstreuers 1 verläuft.

Wie die Fig. 1 ferner erkennen lässt, können die einzelnen Schrägansichten 6 überlappen, so dass die Querverteilung 18 des Düngers 3 bzw. das Streubild 20 entlang der Linie 19 in den Schrägansichten 6 lückenlos ermittelt werden kann. Dies ist jedoch nicht zwingend erforderlich.

Der Einfachheit halber sind in der Fig. 1 sämtliche Schrägansichten 6 und die Referenzansicht 7 von einem gemeinsamen Aufnahmeort 9 aus dargestellt. In der praktischen Anwendung wäre es jedoch vorteilhaft, die Schrägansichten 6, gegebenenfalls mit je einer zugehörigen Referenzansicht 7, von unterschiedlichen Aufnahmeorten 9 aus aufzunehmen. Die Zuordnung der Schrägansichten 6 zum jeweiligen Aufnahmeort 9 kann dann beispielsweise mit Hilfe des GPS-Systems 13 erfolgen und/oder durch Positionsbestimmung anhand des in den Referenzansichten 7 abgebildeten zweiten geometrischen Referenzkörpers 8.

Durch GPS-Ortsbestimmung und Zuordnung des Neigungswinkels 12 zu den einzelnen Schrägansichten 6 lässt sich von einer Bedienperson 10 an beliebigen Stellen der Anbaufläche 2 eine Querverteilung 18 des Düngers 3 bezüglich der von dem Schleuderstreuer 1 befahrenen Fahrspur 4 ermitteln.

Derartige Querverteilungen 18 repräsentieren Streubilder 20 für den Schleuderstreuer 1 und die gestreute Sorte oder Charge des Düngers 3. Die Streubilder 20 geben beispielsweise die gestreute Düngermenge DM pro Bodenflächeneinheit quer zur Fahrtrichtung 1a wieder. Dadurch lässt sich eine tatsächliche Arbeitsbreite AB des Düngeraustrags ermitteln sowie der Verlauf der Querverteilung 18 zwischen der Fahrspur 4 und der Arbeitsbreite AB.

Bei der Bildauswertung wird dem Bewuchs 2c vorzugsweise ein erster separater Farbbereich, insbesondere im grünen Spektralbereich zugeordnet.

Dem Dünger 3 wird vorzugsweise ein zweiter separater Farbbereich zugeordnet, der beispielsweise durch separate Abbildung des Düngers 3 unmittelbar vor, während oder unmittelbar nach der Aufnahme der Schrägansichten 6 durch Bildauswertung und Farbanalyse des abgebildeten Düngers 3 bestimmt wird.

Ebenso könnte dem Dünger 3 von Herstellerseite ein bestimmter Farbbereich für die separate Bildauswertung und Erkennung des Düngers in den Schrägansichten 6 zugeordnet werden.

Dem Boden 2b der Anbaufläche 2 wird vorzugsweise ein dritter separater Farbbereich für die Bildauswertung zugeordnet, der vorzugsweise unmittelbar vor, während oder unmittelbar nach der Aufnahme der Schrägansichten 6 aus einer Farbanalyse des abgebildeten Bodens 2b ermittelt wird.

In der Folge lässt sich durch separate Auswertung der Farbbereiche sowohl die Bedeckung des Bodens 2b mit Dünger 3 als auch mit Bewuchs 2c in den Schrägansichten 6 abschätzen. Ebenso kann dadurch eine perspektivische Verdeckung des Düngers 3 durch den Bewuchs 2c abgeschätzt werden.

Dies dient einer genaueren der Bestimmung der gestreuten Düngermengen DM pro Flächeneinheit.

Geeignete Programmapplikationen zur farbspezifischen Bildauswertung der Schrägansichten 6 können insbesondere in einem Smartphone 5 auf einfache Weise installiert werden.

Das Smartphone 5 oder dergleichen Bildaufnahmegerät kommuniziert mit dem Bordcomputer 15 vorzugsweise drahtlos zur Übertragung von Bilddaten der Schrägansichten 6 und/oder zur Übermittlung von Berechnungsergebnissen, die auf den Bilddaten der Schrägansichten 6 beruhen. Beispielsweise kann die Bildauswertung der Schrägansichten 6 und/oder der Referenzansichten 7 in dem Smartphone 5 oder dergleichen Bildaufnahmegerät durchgeführt werden. Ebenso kann darin eine Querverteilung 18 des Düngers 3 und somit ein Streubild 20 des Schleuderstreuers 1 quer zur Fahrtrichtung 1a ermittelt werden.

Alternativ können die Bildauswertung und darauf basierende Berechnungen im Bordcomputer 15 durchgeführt werden. Dieser kann die Berechnungsergebnisse, insbesondere das ermittelte Streubild 20 zur Korrektur von Einstellwerten des Schleuderstreuers 1 verwenden, die beispielsweise die Drehzahl von an dem Schleuderstreuer 1 ausgebildeten Streuscheiben (nicht dargestellt), die Position von Einleitsystemen (nicht dargestellt) an dem Schleuderstreuer 1 und/oder die dosierte Düngermenge an den Streuscheiben sind.

Mit dem beschriebenen Verfahren lässt sich die Querverteilung 18 des Düngers 3 bzw. das Streubild 20 des Schleuderstreuers 1 flexibel von einer auf der Anbaufläche 2 stehenden Person 10 und mit geringem technischen Aufwand ermitteln. Geometrische Referenzkörper 8, 14 sind zur Ortsbestimmung und Neigungsmessung nicht zwingend erforderlich, könnten jedoch ohne großen technischen Aufwand im Bereich der abzubildenden Teilbereiche 2a der Anbaufläche 2 und/oder auf der Fahrspur 4 positioniert werden.

Ebenso ist eine Kombination von Ortsbestimmung und Messung der Neigung 12 anhand von GPS-Systemen 13, Neigungssensoren 11 und geometrischen Referenzkörpern 8, 14 je nach Anwendungsfall prinzipiell beliebig kombinierbar, um die Aussagekraft der Messungen und die Genauigkeit der ermittelten Querverteilung 18 bzw. des Streubilds 20 zu erhöhen.

## Patentansprüche

1. Verfahren zum Bestimmen eines Streubilds (20) eines Schleuderstreuers (1) auf einer landwirtschaftlichen Anbaufläche (2), wobei ein von dem Schleuderstreuer (1) erzeugter Streufächer (3a) in Fahrtrichtung (1a) über die Anbaufläche (2) bewegt wird und mehrere bezüglich ihrer Position quer zur Fahrtrichtung unterschiedliche Teilbereiche (2a) der bestreuten Anbaufläche (2) digital abgebildet werden, wobei die Teilbereiche (2a) in Schrägansichten (6) abgebildet werden, dass die Neigung (12) der Schrägansichten (6) zur flächenspezifischen Berechnung von Düngermengen (DM) bestimmt wird, und dass Bilddaten der Schrägansichten (6) mittels einer Bildauswerteeinheit in unterschiedlichen Farbbereichen analysiert werden, um zwischen Boden (2b), Bewuchs (2c) und Dünger (3) zu unterscheiden, und dass daraus mittels einer Berechnungseinheit den Teilbereichen (2a) zugeordnete Düngermengen (DM) berechnet werden, wobei die Analyse der Bilddaten und die Berechnung der Düngermengen (DM) auf der Grundlage digitaler Bildbearbeitung im Bildaufnahmegerät und/oder in einem separaten Computer erfolgen.

2. Verfahren nach Anspruch 1, wobei aus den berechneten Düngermengen (DM) eine Verteilung (18) des Düngers (3) quer zur Fahrtrichtung (1a) ermittelt wird.

3. Verfahren nach Anspruch 1 oder 2, wobei dem Bewuchs (2c) zur Auswertung der Bilddaten ein separater, insbesondere grüner Farbbereich zugeordnet wird.

4. Verfahren nach einem der vorigen Ansprüche, wobei dem Dünger (3) zur Auswertung der Bilddaten ein separater Farbbereich zugeordnet wird, der insbesondere durch separate Abbildung des Düngers (3) ermittelt und/oder in Form einer für den Dünger (3) spezifischen Herstellerangabe vorgegeben wird.

5. Verfahren nach wenigstens einem der vorigen Ansprüche, wobei dem Boden (2b) zur Auswertung der Bilddaten ein separater Farbbereich zugeordnet wird, der insbesondere durch separate Abbildung des Bodens (2b) ermittelt wird.

6. Verfahren nach wenigstens einem der vorigen Ansprüche, wobei die Neigung (12) mittels eines Neigungssensors (11) bestimmt wird.

7. Verfahren nach wenigstens einem der vorigen Ansprüche, wobei die Neigung (12) aus einer perspektivischen Verzerrung eines gemeinsam mit den Teilbereichen (2a) der bestreuten Anbaufläche (2) abgebildeten geometrischen Referenzkörpers (14) bestimmt wird.

8. Verfahren nach wenigstens einem der vorigen Ansprüche, wobei ferner ein geometrischer Referenzkörper (8) auf einer von dem Schleuderstreuer (1) befahrenen Fahrspur (4) positioniert wird und zu den Schrägansichten (6) Referenzansichten (7) des geometrischen Referenzkörpers (8) erstellt werden.

9. Verfahren nach wenigstens einem der vorigen Ansprüche, wobei ferner zu wenigstens einer Schrägansicht (6) eine Ortsbestimmung des Aufnahmeorts (9) mittels GPS durchgeführt wird.

10. Verfahren nach wenigstens einem der vorigen Ansprüche, wobei die Höhe des Bewuchses (2c) ermittelt wird, und wobei eine relative Verdeckung des Düngers (3) in den Schrägansichten (6) durch den Bewuchs (2c) berechnet und bei der Berechnung der Düngermenge (DM) berücksichtigt wird.

11. Verfahren nach wenigstens einem der vorigen Ansprüche, wobei die Teilbereiche (2a) überlappend abgebildet werden.

12. Verfahren nach wenigstens einem der vorigen Ansprüche, wobei die Schrägansichten (6) mit einem Smartphone (5) aufgenommen werden und insbesondere zugehörige Bilddaten darin verarbeitet und daraus die Düngermengen (DM) für die einzelnen Schrägansichten (6) und/oder eine Verteilung (18) des Düngers (3) quer zur Fahrtrichtung (1a) berechnet wird.

13. Verfahren nach wenigstens einem der Ansprüche 1 bis 11, wobei die Schrägansichten (6) mit einer digitalen Kamera aufgenommen werden, und wobei zugehörige Bilddaten drahtlos an einen zur Steuerung des Schleuderstreuers (1) ausgebildeten Bordcomputer (15) übermittelt werden, und wobei der Bordcomputer (15) daraus Düngermengen für die einzelnen Schrägansichten (6), eine Verteilung (18) des Düngers (3) quer zur Fahrtrichtung (1a) und/oder Einstellwerte für den Schleuderstreuer (1) berechnet.

14. Verfahren nach wenigstens einem der vorigen Ansprüche, wobei die Schrägansichten (6) von einer auf der Anbaufläche (2) stehenden Person (10) aufgenommen werden.

15. Vorrichtung zum Bestimmen eines Streubilds (20) eines Schleuderstreuers (1) auf einer landwirtschaftlichen Anbaufläche (2) gemäß dem Verfahren nach wenigstens einem der vorigen Ansprüche und umfassend:
- ein digitales Bildaufnahmegerät, insbesondere ein Smartphone (5), zum Erzeugen von Bilddaten von in Schrägansichten (6) aufgenommen Teilbereichen (2a) einer bestreuten Anbaufläche (2);
- einen Neigungssensor (11) zum Bestimmen der Neigung (12) der Schrägansichten (6);
- eine Bildauswerteeinheit zum Analysieren der Bilddaten in unterschiedlichen Farbbereichen, um zwischen Boden (2b), Bewuchs (2c) und Dünger (3) zu unterscheiden, wobei die Bildauswerteeinheit dazu ausgebildet ist, dem Bewuchs (2c) einen ersten separaten Farbbereich und dem Dünger (3) einen zweiten separaten Farbbereich zuzuordnen; und
- eine Berechnungseinheit zum von der Neigung abhängigen flächenspezifischen Berechnen von den Teilbereichen (2a) zugeordneten Düngermengen (DM) und zur Berechnung einer Verteilung (18) des Düngers (3) entlang der aufgenommenen Teilbereiche (2a).

## Claims

1. Method for determining a distribution pattern (20) of a distributor (1) over an agricultural area under cultivation (2), wherein a spreading fan (3a) produced by the distributor (1) is moved in the direction of travel (1a) over the area under cultivation (2) and a plurality of sub-regions (2a) of the area under cultivation (2) on which fertilizer is spread, which are different with respect to their position transverse to the direction of travel, are digitally imaged, wherein the sub-regions (2a) are imaged in oblique views (6), that the inclination (12) of the oblique views (6) for the area-specific calculation of fertilizer quantities (DM) is determined, and that image data of the oblique views (6) are analyzed by means of an image analysis unit in different color regions in order to distinguish between ground (2b), vegetation (2c) and fertilizer (3), and that fertilizer quantities (DM) assigned to the sub-regions (2a) are calculated therefrom by means of a calculation unit, wherein the analysis of the image data and the calculation of the fertilizer quantities (DM) are carried out on the basis of digital image processing in the image-recording device and/or in a separate computer.

2. Method according to claim 1, wherein a distribution (18) of the fertilizer (3) transversely to the direction of travel (1a) is determined from the calculated fertilizer quantities (DM).

3. Method according to claim 1 or 2, wherein a separate, in particular green, color region is assigned to the vegetation (2c) for analyzing the image data.

4. Method according to any of the preceding claims, wherein a separate color region is assigned to the fertilizer (3) in order to analyze the image data, which color region is determined in particular by separate imaging of the fertilizer (3) and/or is predetermined in the form of a manufacturer specification specific to the fertilizer (3).

5. Method according to at least one of the preceding claims, wherein a separate color region is assigned to the ground (2b) for analyzing the image data, which color region is determined in particular by separate imaging of the ground (2b).

6. Method according to at least one of the preceding claims, wherein the inclination (12) is determined by means of an inclination sensor (11).

7. Method according to at least one of the preceding claims, wherein the inclination (12) is determined from a perspective distortion of a geometric reference body (14) imaged together with the sub-regions (2a) of the area under cultivation (2) on which fertilizer is spread.

8. Method according to at least one of the preceding claims, wherein a geometric reference body (8) is furthermore positioned on a driving track (4) traveled by the distributor (1), and reference views (7) of the geometric reference body (8) are created for the oblique views (6).

9. Method according to at least one of the preceding claims, wherein a location determination of the pick-up location (9) is also carried out by means of GPS for at least one oblique view (6).

10. Method according to at least one of the preceding claims, wherein the height of the vegetation (2c) is determined, and wherein a relative concealment of the fertilizer (3) in the oblique views (6) by the vegetation (2c) is calculated and taken into account in the calculation of the fertilizer quantity (DM).

11. Method according to at least one of the preceding claims, wherein the sub-regions (2a) are imaged in an overlapping manner.

12. Method according to at least one of the preceding claims, wherein the oblique views (6) are recorded with a smartphone (5) and in particular associated image data are processed therein, and calculated therefrom are the fertilizer quantities (DM) for the individual oblique views (6) and/or a distribution (18) of the fertilizer (3) transversely to the direction of travel (1a).

13. Method according to at least one of claims 1 to 11, wherein the oblique views (6) are recorded with a digital camera, and wherein associated image data are transmitted wirelessly to an onboard computer (15) designed to control the distributor (1), and wherein the onboard computer (15) calculates therefrom fertilizer quantities for the individual oblique views (6), a distribution (18) of the fertilizer (3) transversely to the direction of travel (1a), and/or set values for the distributor (1).

14. Method according to at least one of the preceding claims, wherein the oblique views (6) are recorded by a person (10) standing in the area under cultivation (2).

15. Device for determining a distribution pattern (20) of a distributor (1) on an agricultural area under cultivation (2) according to the method according to at least one of the preceding claims and comprising:
- a digital image-recording device, in particular a smartphone (5), for generating image data of sub-regions (2a) of an area under cultivation (2) on which fertilizer is spread, which data are recorded in oblique views (6);
- an inclination sensor (11) for determining the inclination (12) of the oblique views (6);
- an image analysis unit for analyzing the image data in different color regions in order to distinguish between ground (2b), vegetation (2c) and fertilizer (3), wherein the image analysis unit is designed to assign a first separate color region to the vegetation (2c) and a second separate color region to the fertilizer (3); and
- a calculation unit for area-specific calculation of fertilizer quantities (DM) assigned to the sub-regions (2a) depending on the inclination and for calculation of a distribution (18) of the fertilizer (3) along the recorded sub-regions (2a).

## Revendications

1. Procédé de détermination d'un diagramme de dispersion (20) d'un épandeur centrifuge (1) sur une surface cultivable (2) agricole, dans lequel un champ d'épandage (3a) généré par l'épandeur centrifuge (1) est déplacé dans une direction de déplacement (1a) sur la surface cultivable (2) et plusieurs zones partielles (2a) de la surface cultivable (2) traitée par épandage, différant par leur position transversalement à la direction de déplacement, sont représentées de manière numérique, dans lequel les zones partielles (2a) sont représentées dans des vues obliques (6) que l'inclinaison (12) des vues obliques (6) est déterminée pour le calcul spécifique à la surface des quantités d'engrais (DM) et que des données d'image des vues obliques (6) sont analysées au moyen d'une unité d'évaluation d'image dans différentes plages chromatiques pour pouvoir distinguer le sol (2b), la végétation (2c) et l'engrais (3) et qu'à partir de ladite analyse, au moyen d'une unité de calcul, les quantités d'engrais (DM) affectées aux zones partielles (2a) sont calculées, dans lequel l'analyse des données d'image et le calcul des quantités d'engrais (DM) s'effectuent en fonction d'un traitement numérique des images dans un appareil d'enregistrement d'image et/ou dans un ordinateur distinct.

2. Procédé selon la revendication 1, dans lequel, à partir des quantités d'engrais (DM) calculées, une répartition (18) de l'engrais (3) est déterminée transversalement à la direction de déplacement (1a).

3. Procédé selon la revendication 1 ou 2, dans lequel, pour évaluer les données d'image, une plage chromatique distincte, en particulier de la couleur verte, est affectée à la végétation (2c).

4. Procédé selon l'une quelconque des revendications précédentes, dans lequel, pour évaluer les données d'image, une plage chromatique distincte est affectée à l'engrais (3), laquelle est déterminée en particulier au moyen d'une représentation distincte de l'engrais (3) et/ou prédéterminée sous la forme d'une indication du fabricant spécifique à l'engrais (3).

5. Procédé selon au moins l'une quelconque des revendications précédentes, dans lequel, pour évaluer les données d'image, une plage chromatique distincte est affectée au sol (2b), laquelle est déterminée en particulier au moyen d'une représentation distincte du sol (2b).

6. Procédé selon au moins l'une quelconque des revendications précédentes, dans lequel l'inclinaison (12) est déterminée au moyen d'un capteur d'inclinaison (11).

7. Procédé selon au moins l'une quelconque des revendications précédentes, dans lequel l'inclinaison (12) est déterminée à partir d'une distorsion en perspective d'un corps de référence (14) géométrique représenté conjointement avec les zones partielles (2a) de la surface cultivable (2) traitée par épandage.

8. Procédé selon au moins l'une quelconque des revendications précédentes, dans lequel un corps de référence (8) géométrique est en outre positionné sur une trajectoire (4) parcourue par l'épandeur centrifuge (1) et, pour les vues obliques (6), des vues de référence (7) du corps de référence géométrique (8) sont créées.

9. Procédé selon au moins l'une quelconque des revendications précédentes, dans lequel, en outre, pour l'au moins une vue oblique (6), une localisation de l'emplacement d'enregistrement (9) est mise en oeuvre au moyen d'un GPS.

10. Procédé selon au moins l'une quelconque des revendications précédentes, dans lequel la hauteur de la végétation (2c) est déterminée et dans lequel un obscurcissement relatif de l'engrais (3) dans les vues obliques (6) par la végétation (2c) est calculé et pris en compte lors du calcul de la quantité d'engrais (DM).

11. Procédé selon au moins l'une quelconque des revendications précédentes, dans lequel les zones partielles (2a) sont représentées en chevauchement.

12. Procédé selon au moins l'une quelconque des revendications précédentes, dans lequel les vues obliques (6) sont enregistrées à l'aide d'un téléphone intelligent (5) et, en particulier les données d'image associées y sont traitées et, à partir de celles-ci, les quantités d'engrais (DM) pour les vues obliques (6) individuelles et/ou une répartition (18) de l'engrais (3) transversalement à la direction de déplacement (1a) sont calculées.

13. Procédé selon au moins l'une quelconque des revendications 1 à 11, dans lequel les vues obliques (6) sont enregistrées à l'aide d'une caméra numérique et dans lequel les données d'image associées sont transmises sans fil à un ordinateur embarqué (15) conçu pour commander l'épandeur centrifuge (1) et dans lequel l'ordinateur embarqué (15) calcule, à partir de celles-ci, des quantités d'engrais pour les vues obliques (6) individuelles, une répartition (18) de l'engrais (3) transversalement à la direction de déplacement (1a) et/ou des valeurs de réglage pour l'épandeur centrifuge (1).

14. Procédé selon au moins l'une quelconque des revendications précédentes, dans lequel les vues obliques (6) sont enregistrées par une personne (10) se trouvant sur la surface cultivable (2).

15. Dispositif de détermination d'un diagramme de dispersion (20) d'un épandeur centrifuge (1) sur une surface cultivable (2) agricole selon le procédé selon au moins l'une quelconque des revendications précédentes et comprenant :
- un appareil numérique d'enregistrement d'image, en particulier un téléphone intelligent (5), permettant de générer des données d'image de zones partielles (2a) d'une surface cultivable (2) traitée par épandage, enregistrées en vues obliques (6) ;
- un capteur d'inclinaison (11) permettant de déterminer l'inclinaison (12) des vues obliques (6) ;
- une unité d'évaluation d'image permettant d'analyser les données d'image dans différentes plages chromatiques pour pouvoir distinguer le sol (2b), la végétation (2c) et l'engrais (3), dans lequel l'unité d'évaluation d'image est conçue pour affecter une première plage chromatique distincte à la végétation (2c) et une seconde plage chromatique distincte à l'engrais (3) ; et
- une unité de calcul permettant de calculer de manière spécifique à la surface en fonction de l'inclinaison des quantités d'engrais (DM) affectées aux zones partielles (2a) et de calculer une répartition (18) de l'engrais (3) le long des zones partielles (2a) enregistrées.
